# EUROPEAN PATENT SPECIFICATION

(11) **EP 2 662 703 B1**
(45) Date of publication and mention of the grant of the patent: **18.10.2017**
(21) Application number: 12167456.8
(22) Date of filing: 10.05.2012
(51) Int. Cl.: G01S 13/75, G06K 7/00, G01S 5/02

(54) **Improving positioning accuracy of location tracking system**
Verbesserung der Positionierungsgenauigkeit eines Standortverfolgungssystems
Amélioration de la précision de positionnement de système de suivi d'emplacement

(43) Date of publication of application: 13.11.2013
(73) Proprietor: 9Solutions Oy, 90590 Oulu (FI)
(72) Inventor: Pesonen, Arto, 90590 Oulu (FI); Luttinen, Tapani, 90590 Oulu (FI)
(74) Representative: Kolster Oy Ab

(56) References cited:
- US-A1- 2005 093 679
- US-A1- 2006 114 104
- US-A1- 2009 315 685
- US-A1- 2010 067 420
- US-A1- 2010 167 758
- US-A1- 2010 201 520

## Description

### Field

The invention relates to the technical field of location tracking systems.

### Background

Prior art teaches several types of location tracking systems. Satellite based tracking systems, e.g. Global Positioning System (GPS), are probably the most common location tracking systems. However, their problem is that they are not suitable for indoor location tracking, because GPS signals do not penetrate building walls. For indoors location tracking, prior art teaches systems that utilize a pico network of wireless base stations, and the location of a given person in the coverage area of the pico network is determined on the basis of which wireless base station currently serves a personal communication device of the person. Other prior art systems rely on radio frequency identification technology or other radio communication technology, wherein a plurality of nodes disposed throughout an area are used to track locations of mobile devices.

US 2010/201520 describes a system, methods and apparatus for determining location of an item within a space. Each particular item is associated with a particular Radio Frequency Identification (RFID) item tag that uniquely identifies the particular item. A plurality of fixed Radio Frequency Identification (RFID) readers are provided in the space, and each of the fixed RFID readers is fixed at a particular known location within the space. Each of the fixed RFID readers can transmit an interrogation signal. Upon receiving a first interrogation signal from one of the fixed RFID readers, a first RFID item tag transmits a response signal. The first fixed RFID reader receives the response signal transmitted by the first RFID item tag, and can therefore determine that the first RFID item tag is located within a read range of the first fixed RFID reader.

US 2009/315685 an RFID system. A reader transmits a reader signal to beacon tags and a listening tag. The beacon tags transmit beacon signals including a beacon identification and a beacon distance to the reader. The listening tag receives the beacon signals. Neighbor distances are calculated for the beacon tags based on when the beacon signals are received, when the listening tag receives the reader signal, and a constant processing time. The neighbor distances are the individual distances from the listening tag to the beacon tags. A list is stored including the beacon identification for the beacon tags, the beacon distance, and the neighbor distances. The listening tag transmits the list and a listening tag identification to the reader.; A geographical position of the listening tag is calculated based on the beacon distance, beacon coordinates, and a listening tag distance which is from the reader to the listening tag.

### Brief description

According to an aspect of the present invention, there is provided a location tracking system as specified in claim 1 and radio beacon node as specified in claim 10.

Embodiments of the invention are defined in the dependent claims.

### List of drawings

Embodiments of the present invention are described below, by way of example only, with reference to the accompanying drawings, in which
Figure 1 illustrates a layout of an area where location tracking is carried out;
Figure 2 illustrates a static network infrastructure formed by location tracking nodes according to an embodiment of the invention;
Figure 3 illustrates the layout of the area where location tracking is carried out, wherein a plurality of radio beacon nodes have been installed according to an embodiment of the invention;
Figure 4 illustrates communication between radio beacon nodes according to an embodiment of the invention;
Figure 5 illustrates an embodiment of a beacon frame broadcasted by a radio beacon node;
Figures 6 to 8 illustrate embodiments of signalling diagrams for carrying out the location tracking; and
Figure 9 illustrates a structure of a radio beacon node according to an embodiment of the invention.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

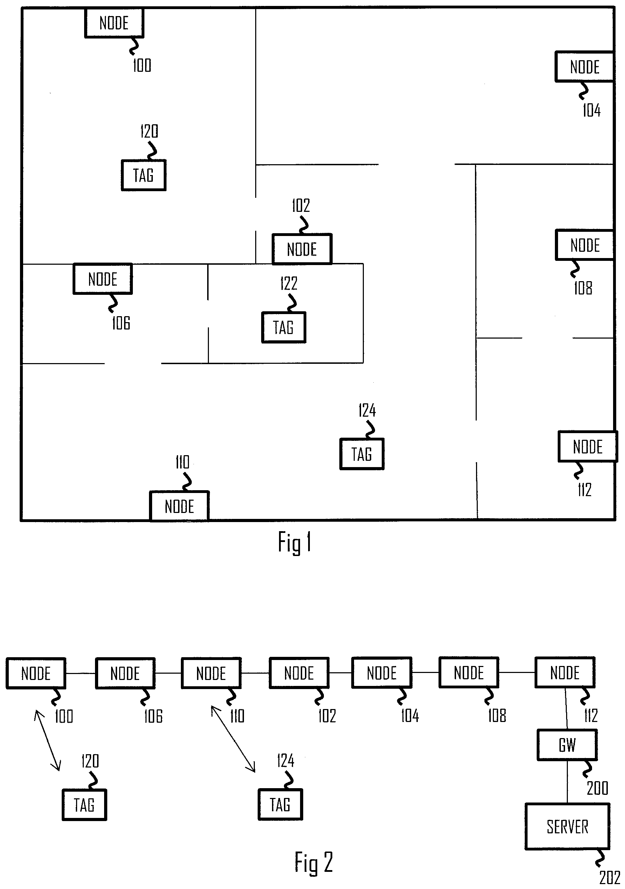

Figure 1 illustrates an exemplary layout of an indoor area to which embodiments of a location tracking system (LTS) may be applied. The embodiments are particularly suitable for indoor location tracking, but the invention may equally be utilized in outdoor applications. The layout of Figure 1 illustrates a number of rooms with doors illustrated by discontinuations in the room walls, and a hallway providing access from one room to another. People inside the building that are being location-tracked are represented by their user equipment or, as from now on called, mobile tags 120, 122, 124. The mobile tag 120 to 124 may be an apparatus dedicated to the location tracking but, in general, the apparatus comprising the mobile tag 120 to 124 may have other functionalities. For example, the apparatus comprising the mobile tag may be a cellular phone, a palm computer, or any other portable electronic device. In some embodiments where the LTS uses Bluetooth communication capability, the apparatus may be any Bluetooth or Bluetooth Low Energy capable device. The same analogy applies to radio access schemes other than the Bluetooth.

The location tracking is enabled by disposing a plurality of location tracking nodes (or LTS nodes) 100 to 112 throughout the area where the location tracking is to be carried out. The LTS nodes 100 to 112 may be radio communication devices, each configured to provide a coverage area effectively defined by transmission power and receiver sensitivity, for example, and the combined coverage areas of the LTS nodes 100 to 112 may be designed to cover the location tracking area. The LTS nodes 100 to 112 may also form a fixed or static network infrastructure enabling data routing between the nodes 100 to 112 and through the nodes 100 to 112. Figure 2 illustrates an embodiment of such a network infrastructure. Referring to Figure 2, the network topology may be a pipeline topology where an arbitrary LTS node communicates with one or two neighbouring LTS nodes such that the LTS nodes form a pipelined structure. Other topologies are equally possible but the topology may be static or at least semi-static to enable reliable data transfer with low signalling and processing overhead. The LTS nodes 100 to 112 may be provided with a backup mechanism in preparation for one or more LTS nodes breaking and falling off from the network. An example of such a mechanism is providing an LTS node with an identifier of an auxiliary LTS node to which the LTS node connects to if it detects that one of its neighbouring LTS nodes has dropped from the network.

A location tracking apparatus or a module that may be comprised in a server 202 may be connected to the network of LTS nodes 100 to 112 directly or through a gateway node 200, and the location tracking apparatus may be configured to maintain locations of tracked objects and control the location tracking and other features of the LTS. The server 202 and the location tracking apparatus may be realized by a computer provided with suitable communication equipment so as to enable a communication connection with the LTS nodes 100 to 112. The server 202 may be connected to the gateway node 200 via an Internet Protocol (IP) connection, and the router may be configured to connect to the fixed network of LTS nodes 100 to 112 through another connection type. The connection in the fixed network of LTS nodes 100 to 112 may be established by using radio connections according to a Bluetooth technology, but it should be understood that other radio communication schemes may be used as well, e.g. IEEE 802.11, radio frequency identification (RFID), or Zigbee.

The locations of objects are tracked by tracking movement of tags 120 to 124 attached to the objects. As examples of the tags 120 to 124, a user tag may be carried by a person, and an asset tag may be attached to an asset. The asset may be any mobile or portable apparatus that is wanted to be tracked, e.g. a wheelchair, a computer, or expensive industrial testing equipment. The asset tag may equally be attached to a fixed apparatus, e.g. a safe, a projector, in order to detect attempted robbery. The different tags 120 to 124 whose movement and location are tracked may be called generally mobile tags, although some of the tags 120 to 128 may actually be in a substantially fixed position. The location tracking may be based on a scheme where a mobile tag is configured to detect the closest LTS node and to transmit to the server 202 periodically a message comprising an identifier of the mobile tag and an identifier of the detected closest LTS node, or a plurality of detected LTS nodes. The message may be routed through the fixed network of LTS nodes 100 to 112 to the server 202. As the server 202 is provided with information on fixed locations of the LTS nodes 100 to 112, e.g. in a layout of the area, the server 202 is able to associate the mobile tag with the LTS node on the basis of the received message and, thus, determine the location of the mobile tag and the object associated with the mobile tag. In another embodiment, an LTS node is configured to detect mobile tags in its coverage area and transmit periodically identifiers of detected mobile tags to the server 202. Similarly, the server 202 may then determine the location of each mobile tag on the basis of the LTS nodes that have detected the mobile tag. The detection of the LTS nodes or mobile tags may be based on Bluetooth Low Energy (BTLE) advertising procedure. The LTS may, however, utilize another location tracking scheme and/or another communication scheme.

The apparatus carrying out the detection and reporting to the server, e.g. an LTS node detecting mobile tags or a mobile tag detecting LTS nodes, may be configured in a detection procedure to report a closest detected apparatus (as determined by the highest estimated reception power), a determined number of closest detected apparatuses, or all the detected apparatuses. The detection may include at least one threshold in the apparatus reporting the detection, e.g. a LTS node or a mobile tag. The threshold may be a rapid detection threshold, and a mobile tag may be configured to estimate a received signal strength indicator (RSSI) or another metric proportional to a reception power for a signal received from an LTS node. If the RSSI exceeds the rapid detection threshold, the mobile tag may instantly link to the LTS node without waiting for further signals from other LTS nodes. This speeds up the positioning and reduces operations carried out in the mobile tag, thereby also reducing power consumption. If the RSSI is below the rapid detection threshold, the mobile tag may be configured to continue the detection procedure by attempting to detect other LTS nodes and then collectively transmit to the server a message comprising identifiers of the detected LTS nodes. The operation is similar when the LTS attempts to detect the mobile tags and applies the rapid detection threshold. Another example of the threshold is a discarding threshold, wherein those apparatuses that are detected but whose RSSI is below the discarding threshold are discarded from the report. This eliminates reporting and possible positioning to LTS nodes that are far from the mobile tag.

Figure 2 illustrates examples of routing signals between the elements of the system according to an embodiment of the present invention. As already mentioned, the LTS node(s) 100 to 112 may transmit their unique identifiers (IDs) by utilizing the BTLE advertising messages or other connectionless means for radio transmitting/broadcasting a unique identifier without establishing an actual radio connection. The LTS nodes 100 to 112 may also form the fixed network used for routing messages in the LTS between the server and the mobile tags 120 to 124 and/or the LTS nodes 100 to 112. The mobile tag(s) 120 to 124 detecting the radio transmissions/broadcasts of the LTS nodes 100 to 112 may connect to any one of the LTS nodes and to forward the detected unique identifiers to the server over the fixed network of LTS nodes configured to route signals through the network to the server 202. In another embodiment, the mobile tags may rely on connectionless broadcast transmissions for reporting the detected identifiers to the nearby LTS nodes that forward the report to the server. The mobile tag may include its identifier, e.g. a transaction identifier or a device identifier, in the broadcast message. One or more of the LTS nodes may be connected to the gateway 200 connected also to a wired network, e.g. Ethernet, so as to connect to the server. The connection to the wired network may be realized by providing a router apparatus or a gateway node 200 providing a wireless connection with the fixed network through at least one LTS node 112 and the wired connection to the server 202. If the server 202 is located in a remote location, the connection between the fixed network and the server 202 may be routed through the Internet. The network may be based on any Bluetooth network technology. Other embodiments may utilize other communication technologies to implement the network, such as IEEE 802.11x (WiFi).

The server 202 may comprise a location tracking apparatus configured to monitor for the locations of the mobile tags 120 to 124. The server may additionally comprise a control apparatus or a control module configured to control operational parameters of the LTS. The control apparatus may monitor and control the transmission powers and other communication parameters, control detection parameters such as the above-mentioned threshold(s), resolve link failures, etc.

One problem in such a system where the LTS nodes are fixed to selected locations and form a fixed network topology relates to changing radio environment. New walls may be built, furniture may be installed, etc. and this may result in degraded location tracking or even lack of location tracking coverage in some areas. On the other hand, after the installation of the LTS system it may be discovered that in some areas the location tracking results in problematic location tracking, e.g. the mobile tag 122 may become mapped to the LTS node 102 which is actually quite far away from the mobile tag 122. Adding new LTS nodes to the system is complex, as it requires changes to the fixed network topology when a new LTS node needs to be added to the network topology. After all, the problem may be in the positioning accuracy and not in the routing performance.

An embodiment of the invention provides structurally and operationally simple positioning devices used dedicatedly for improving the positioning accuracy without being involved in the static network topology. Such positioning devices are called radio beacon nodes herein. As a consequence, the system further comprises at least one radio beacon node disposable to improve the coverage of the location tracking system without belonging to the static communication network infrastructure. The at least one radio beacon node is configured to participate in unidirectional radio broadcasting with said at least one mobile tag for the location tracking purposes. In an embodiment, the unidirectional radio broadcasting refers to the radio beacon node broadcasting a beacon signal comprising a unique identifier of the radio beacon node. In another embodiment, the unidirectional radio broadcasting refers to the mobile tags broadcasting a signal comprising a unique identifier of the mobile tag and the radio beacon node receiving the broadcast. The term unidirectional may be considered to mean that the broadcasted signal is not addressed to any specific recipient or group of recipients and that the broadcasting is a connectionless transmission.

The control apparatus is further configured to receive through the static communication network infrastructure of LTS nodes 100 to 112 a message associating said at least one mobile tag 120 to 124 to said at least one radio beacon node and to map the location of the mobile tag 120 to 124 on the basis of said association.

In an embodiment, the LTS nodes 100 to 112 are capable of bidirectional radio communication, while the radio beacon nodes are configured for only unidirectional communication, e.g. either to broadcast or to receive. In an embodiment, the LTS nodes 100 to 112 are capable of establishing bidirectional radio communication connections with other LTS nodes 100 to 112 and/or with the mobile tags 120 to 124, while the radio beacon nodes are configured not to establish any connections but to rely on connectionless broadcast transmission in the transmission and/or reception.

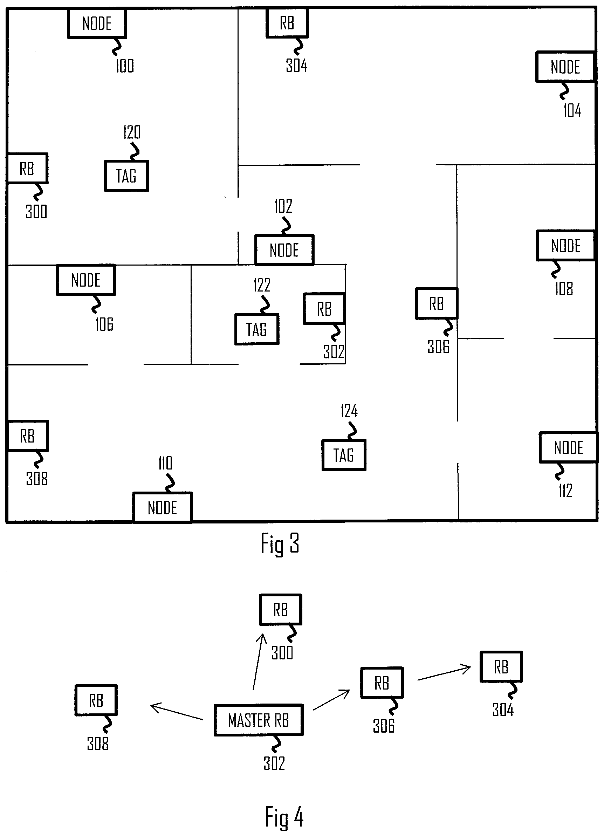

Referring to Figure 3, the radio beacon nodes 300 to 308 may be installed into locations where the location tracking performance needs to be improved. As a consequence, the location tracking performance may be improved in a simple manner without making changes to the network topology. All that is needed is to store locations of each radio beacon node 300 to 308 in the server 202, install the radio beacon node in the corresponding location in the area, and to switch the radio beacon node on. Each radio beacon node may be preconfigured with its unique identifier and to start its operation independently.

In an embodiment, the radio beacon nodes 300 to 308 may form a beacon network for exchanging operational parameters amongst the radio beacon nodes 300 to 308. The beacon network may be defined such that each radio beacon node 300 to 308 scans passively for beacon transmissions of at least one other radio beacon node and determines operational parameters from the detected beacon transmissions. Referring to Figure 4, one of the radio beacon nodes, e.g. a radio beacon node 302, may be a master beacon node configured to determine the operational parameters and include the operational parameters in its beacon transmissions. Other radio beacon nodes 300, 306, 308 detecting the beacon transmission of the master beacon node 302 may acquire the operational parameters from the detected beacon transmission and, additionally, spread the information by including the operational parameters in their own beacon transmissions. In this manner, even a radio beacon node 304 not able to detect the beacon transmissions of the master beacon node is able to acquire the operational parameters.

In an embodiment, the beacon transmissions of the radio beacon nodes 300 to 308 are synchronized, and the information on the synchronization may be carried out in the beacon transmissions. The synchronization may be a coarse synchronization in the sense that it is not essential that every radio beacon node transmits exactly at the same time with the other nodes. One aspect in synchronizing the beacon transmissions in the coarse manner is to enable the mobile tags 120 to 124 to enter a sleep mode between the beacon transmissions and to save battery. In an embodiment, a radio beacon node scans for beacon transmissions of other radio beacon nodes and synchronizes its beacon transmission to the detected beacon transmissions. The radio beacon node may determine beacon transmission interval from the detected beacon transmissions and adapt its own beacon transmission interval to the determined beacon transmission interval. In this manner, no separate control signalling or synchronization commands between the radio beacon nodes 300 to 308 are necessary. The radio beacon nodes may determine the beacon transmission timing implicitly from the detected beacon transmissions.

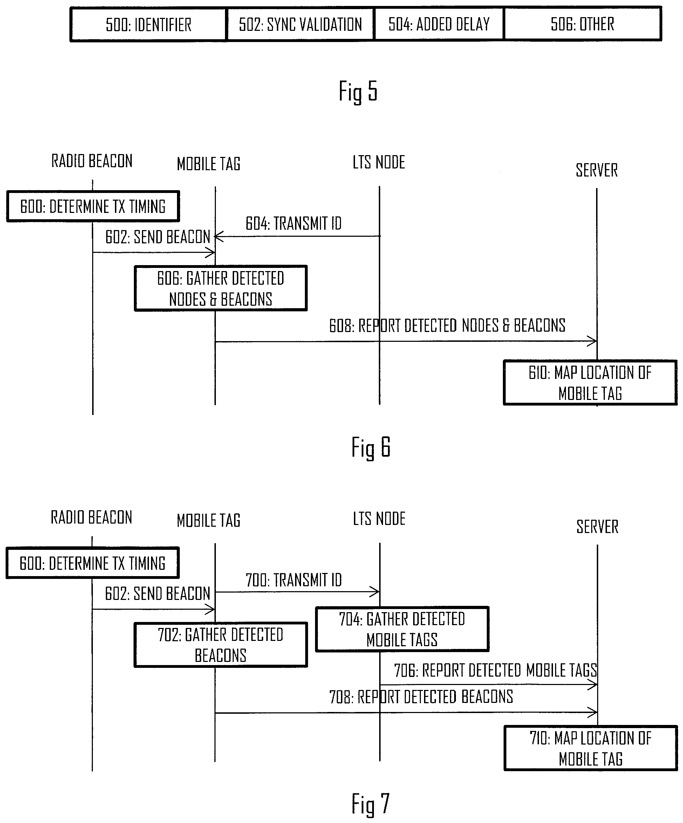

In an embodiment, the radio beacon nodes 300 to 308 insert synchronization parameters in the beacon transmissions. Figure 5 illustrates an embodiment of a beacon frame broadcasted by the radio beacon nodes 300 to 308. The beacon frame may comprise at least an information element 500 carrying the identifier of the transmitter of the beacon frame. This enables a mobile tag receiving the beacon frame to associate to the correct radio beacon node.

The beacon frame may additionally comprise an information element 502 specifying timing of the next resynchronization. Upon synchronizing its beacon transmission, e.g. by determining the transmission timing for the beacon transmissions, a radio beacon node may maintain that timing until the resynchronization timing occurs. The master beacon node 302 may specify a resynchronization interval for the radio beacon nodes 300 to 308 by using the information element 502. The information element 502 may specify duration to the next resynchronization, i.e. duration for how long the current transmission timing is valid. A radio beacon node receiving and analysing the information element 502 maintains its current transmission timing for as long as the transmission timing is validated. When the validation expires as determined by the radio beacon node by using its own timer in connection with previously received information element 502 or by receiving a new information element 502 specifying that the validation has expired or is about to expire, the radio beacon node may reacquire the synchronization by monitoring the beacon transmissions of the other nodes, e.g. the master beacon node 302. If the radio beacon node does not detect the beacon transmissions of the master beacon node 302, the radio beacon node may wait for a predetermined duration after the expiry of the validation to enable neighbouring radio beacon nodes closer to the master beacon node 302 to acquire the resynchronization. The radio beacon node may detect that a neighbouring radio beacon node has acquired a resynchronization by analysing the information element 502. If the information element has been reset, e.g. it has a value that indicates a subsequent resynchronization timing, the radio beacon node may trigger its own resynchronization procedure.

In some embodiments, the radio beacon nodes 300 to 308 add a random or pseudo-random delay to their beacon transmissions in order to reduce mutual interference. In a scenario where the location tracking area is large and many of the radio beacon nodes rely on the synchronization spreading functionality by synchronizing to neighbouring non-master beacon nodes, the added delay may accumulate and delay the transmission timing of the radio beacon nodes far away from the master beacon node 302. In such a scenario, the transmission timing may be essentially different between the master beacon node and such a remote radio beacon node, and their transmissions are not even coarsely synchronized anymore. Since the radio beacon nodes are not mutually synchronized, the transmission timings of the radio beacon nodes expand in a time domain such that there are no distinctive transmission and non-transmission periods. As a result, the mobile tags can no longer enter the sleep mode. In order to avoid the accumulation of the delay, the beacon frame may comprise an information element 504 comprising the accumulated delay so far. A radio beacon node receiving a beacon frame may extract the total transmission delay associated with the received beacon frame from the information element 504, then determine a transmission delay applied by the radio beacon node, and add the transmission delay to the extracted total transmission delay. Thus updated total transmission delay value may then be inserted into the beacon frame transmitted by the radio beacon node at the transmission timing determined by the radio beacon node through the synchronization plus the added random or pseudo-random transmission delay. In this manner, the cumulative effect of the transmission delays is effectively reduced or even cancelled, and even the radio beacon nodes remote to the master beacon node 302 are able to transmit the beacon frames in substantially synchronized manner, and there exist distinguishable transmission and non-transmission periods in the beacon transmissions throughout the system. This increases the duration of the sleep periods of the mobile tags 120 to 124 and improves battery lifetime.

The beacon frame may further comprise other information elements 506 that carry other information, depending on the design of the location tracking system.

In an embodiment, at least the master beacon node includes the above-described information elements to its beacon transmissions. In an embodiment, only the master beacon node is configured to include the information elements in the beacon transmissions, while other radio beacon nodes to not include them. This embodiment may be used when all the radio beacon nodes are able to detect the master beacon node. However, in other embodiments the information spreads in the above-described manner by configuring all the radio beacon nodes to include the information element controlling the synchronization and operational parameters into their beacon transmissions. This embodiment may be used in arbitrarily large location tracking systems.

In an embodiment where the LTS nodes 100 to 112 transmit or broadcast their identifiers and the mobile tags 120 to 124 scan for and detect the identifiers of the LTS nodes 100 to 112 and the radio beacon nodes 300 to 308, the beacon transmissions of the radio beacon nodes 300 to 308 are further synchronized with the transmissions of the LTS nodes 100 to 112. In such embodiments, the radio beacon nodes 300 to 308 may scan for transmission intervals of the LTS nodes 100 to 112 and adapt their transmission timings to the transmission intervals of the LTS nodes 100 to 112. In another embodiment, only the master beacon node 302 may synchronize its transmission timing to the transmission timing of the LTS nodes 100 to 112, while the other radio beacon nodes synchronize to the master beacon node 302 in the above-described manner.

The radio beacon nodes 300 to 308 may synchronize only to the location tracking transmissions of the LTS nodes 100 to 112. For example, if the LTS nodes transmit a specific location tracking frame for announcing their presence to the mobile tags 120 to 124 and use another type of frames for routing messages within the static network infrastructure, the radio beacon nodes 300 to 308 may synchronize to the transmission timing of the location tracking frames. Such embodiments may utilize the information elements 502, 504 for specifying a resynchronization interval and the delay added to the transmitted beacon frames.

Let us now consider with reference to Figures 6 to 8 some embodiments of the location tracking in the location tracking system comprising the LTS nodes 100 to 112 forming the static network infrastructure, the radio beacon nodes 300 to 308 not belonging to the network infrastructure, and mobile tags 120 to 124 being tracked. Figures 6 to 8 illustrate signalling diagrams related to associating the mobile tags 120 to 124 with LTS nodes 100 to 112 and/or with the radio beacon nodes 300 to 308 and reporting the association to the location tracking apparatus so that the location of the mobile tags 120 to 124 may be mapped to the real location on a map stored in the location tracking apparatus.

In the embodiment of Figure 6, the mobile tags scan for transmissions of the LTS nodes and the radio beacon nodes and report the detected LTS nodes and/or radio beacon nodes to the server. Referring to Figure 6, a radio beacon node is configured to determine a transmission timing of the beacon transmission in block 600. Block 600 may comprise synchronizing to another radio beacon node, e.g. the master beacon node, and/or to another LTS node. In block 602, the radio beacon node broadcasts a beacon frame comprising the identifier of the radio beacon node. In block 604, the LTS node transmits a frame comprising the identifier of the LTS node. In an embodiment where the LTS utilizes the Bluetooth , the frame transmitted by the LTS node may be a Bluetooth advertising message, for example. The radio beacon node may also transmit the advertising message or another beacon frame. The mobile tag may be in a scanning state attempting to detect advertising message transmissions or, in general, in a scanning state attempting to detect transmissions of the LTS nodes and the radio beacon nodes.

The mobile tag may carry out the scanning for a determined period and, then, gather the identifier(s) it has detected during the scanning period (block 606). The mobile tag may insert the detected identifier(s) and the identifier of the mobile tag into a report message and transmit the report message to the server comprising the location tracking apparatus in block 608. In an embodiment, the mobile tag may additionally estimate a reception power, e.g. RSSI, of the detected frames and associate each reception power with the corresponding identifier. Block 608 may comprise establishing a connection with at least one LTS node of the static network infrastructure and transmitting the report message to the LTS node. In another embodiment, block 608 comprises broadcasting the report message and configuring the LTS nodes to scan for broadcasts of the mobile tags. The mobile tag may include in the report message its identifier and an information element that the message is the report message addressed to the server. The LTS node is then configured to forward the report message towards the server in the network. In an embodiment, the report message comprises an information element specifying the server as the recipient of the report message, but in other embodiments the information element may be omitted, and the LTS nodes may be configured to route all data packets not received from the direction of the server towards the server. The server may then determine the destination of the data packets and process them appropriately.

Upon receiving the report message from the static network infrastructure, the location tracking apparatus may extract the transmitter of the report message (the identifier of the mobile tag) and reported identifiers in block 610. Then, the location tracking apparatus may compare the reported identifiers with a map defining locations of the LTS nodes and/or radio beacon nodes corresponding to the reported identifiers. If the report message comprises the reception powers associated with the reported identifiers, the location tracking apparatus may improve the location tracking accuracy by using the reception power or another signal quality metric, angle-of-arrival estimation for a received signal, etc. The reception powers may enable more accurate positioning of the mobile tag to a location between the LTS nodes and/or the radio beacon nodes, as the reception power or, more accurately, path loss derivable from the reception power, is proportional to the distance between a transmitter (an LTS node or a radio beacon node) and a receiver (the mobile tag).

In the embodiment of Figure 7, the radio beacon nodes 300 to 308 and the mobile tags 120 to 124 transmit the location tracking frames. In this embodiment, block 600 may comprise synchronisation amongst the radio beacon frames. Accordingly, the radio beacon nodes may omit the synchronisation of the transmission of the location tracking frames with the mobile tags. In block 602, the radio beacon node transmits the beacon frame by using the transmission timing determined in block 600. In block 700, the mobile tag transmits a location tracking message comprising the identifier of the mobile tag. In block 702, the mobile tag scans for the beacon frames of the radio beacon nodes and gathers the detected identifiers of the radio beacon nodes. In block 704, the LTS node scans for location tracking frames transmitted by mobile tags and gathers mobile tag identifiers extracted from detected location tracking frames. The location tracking frames may be the Bluetooth advertising messages, for example. In block 706, the LTS node reports the detected mobile tags to the location tracking apparatus by transmitting the report message through the network infrastructure. In block 708, the mobile tag transmits a report message comprising the identifiers of the detected radio beacon nodes to the location tracking apparatus through the network infrastructure. In block 710, the location tracking apparatus extracts from the received report messages the LTS nodes and the radio beacon nodes associated with each mobile tag. The location tracking apparatus may extract the radio beacon nodes associated with the mobile tag from the report message received from the mobile tag itself, and it may extract the LTS nodes associated with the mobile tag from report message(s) received from one or more LTS nodes. Thereafter, the location tracking procedure may be carried out as described above.

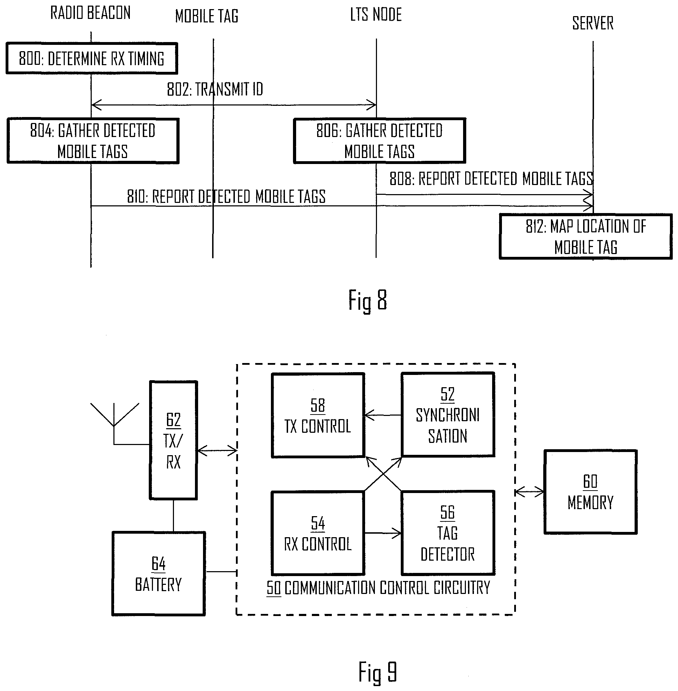

Figure 8 illustrates an embodiment where the mobile tags transmit the location tracking frames and both the LTS nodes and the radio beacon nodes scan for the location tracking messages. In this embodiment, the radio beacon nodes may be configured to synchronise to the transmission of the mobile tags. Furthermore, the transmissions of the mobile tags may be synchronized in order to enable the radio beacon nodes to enter the sleep mode between scanning periods. The synchronization may be carried out in the above-described manner, or the server may control the transmission timing of the location tracking frames.

Referring to Figure 8, the radio beacon node determines the scanning timing in block 800, e.g. by monitoring for transmission intervals of the mobile tags and adapting its scanning periods to the determined transmission intervals. This embodiment may also comprise resynchronisation after a determined time interval, e.g. the radio beacon node may maintain its scanning periodicity until the resynchronisation. The scanning timing may comprise guard periods before and after the determined transmission timing of the location tracking frames such that the probability of not sleeping during the transmission timing is reduced. In block 802, the mobile tag transmits the location tracking message comprising its identifier. In block 804, the radio beacon node gathers the identifiers of mobile tags detected during one or more scanning intervals. In block 806, the LTS node gathers the detected identifiers of mobile tags and reports them to the location tracking apparatus in block 808. In block 810, the radio beacon node establishes a connection with an LTS node of the static network infrastructure and transmits a report message comprising the gathered identifiers of the mobile tags to the location tracking apparatus through the static network infrastructure. In another embodiment, block 810 comprises the radio beacon node broadcasting the report message and configuring the LTS nodes to scan for broadcasts of the radio beacon nodes. The radio beacon node may include in the report message its identifier and an information element that the message is the report message addressed to the server. In block 812, the location tracking apparatus receives the report messages and determines the radio beacon nodes and/or the LTS nodes with which each mobile tag is associated.

Figure 9 illustrates a block diagram of an embodiment of a structure of the radio beacon node 300 to 308. The radio beacon node may be installed to a wall, ceiling, or to any other fixed or substantially fixed structure such that the location of the radio beacon node will be static. The radio beacon node may comprise a casing and a fixing mechanism used for attaching the radio beacon node to the fixed structure. The radio beacon node may further comprise radio interface components 62 providing the radio beacon node with radio communication capabilities. The radio interface components 62 may comprise standard well-known components such as an amplifier, filter, frequency-converter, (de)modulator, and encoder/decoder circuitries and one or more antennas.

The radio beacon node may comprise in the casing a communication control circuitry 50 configured to control the transmission and/or reception of the radio beacon node. The communication control circuitry 50 may support Bluetooth communication technology, for example. The communication control circuitry may comprise a transmission control circuitry 58 configured to form messages for the transmission and to carry out the transmission through the radio interface components 62. The transmission control circuitry 58 may be configured to determine the transmission timing of the beacon frames in the above-described manner and to insert into the beacon frames the necessary information elements. Furthermore, in some embodiments the transmission control circuitry 58 may be configured to acquire identifiers of mobile tags detected during one or more scanning periods and to insert the identifiers of the detected mobile tags into the report message together with the identifier of the radio beacon node, connect to an LTS node, and transmit the report message to the server through the network infrastructure of the LTS nodes. The detection of the LTS nodes may be based on the LTS nodes transmitting a message comprising an information element that indicates that the transmitter of the message belongs to a category of LTS nodes. Similarly, the transmission control circuitry 58 may insert into the beacon frames an information element specifying a category of radio beacon nodes, thus distinguishing the radio beacon node from the LTS nodes.

The communication control circuitry 50 may further comprise a reception control circuitry 54 configured to carry out processing of received messages, e.g. the beacon frames of other radio beacon nodes and/or the location tracking messages from the mobile tags. The reception control circuitry 54 may be configured to extract contents of the beacon frames received from other radio beacon nodes and/ or LTS nodes and output them to a synchronisation circuitry 52, and to extract contents of the location tracking messages received from the mobile tags and output them to a tag detector circuitry 56. The synchronisation circuitry 52 may be configured to determine the reception timing and/or periodicity of the beacon frames and the additional delay added to the beacon frames by the other radio beacon nodes (information element 504). Then, the synchronisation circuitry may determine the transmission timing for the beacon frames and instruct the transmission control circuitry 58 to apply the determined transmission timing to the transmitted beacon frames. The synchronisation circuitry 52 may further monitor for the validity of the current synchronisation by monitoring the information element 52 of the received beacon frames and to carry out a resynchronisation when the validity expires.

The tag detector circuitry 56 may be configured to gather the identifiers of the detected mobile tags and to input the gathered identifiers to the transmission control circuitry 58 in order to transmit the report message to the server.

The radio beacon node may further comprise a memory unit 60 storing the operational parameters of the radio beacon node and computer program products configuring the operation of the radio beacon node. The radio beacon node may further comprise a batter 64 providing the communication control circuitry 50 and the radio interface components 62 with power supply.

As used in this application, the term 'circuitry' refers to all of the following: (a) hardware-only circuit implementations, such as implementations in only analog and/or digital circuitry, and (b) to combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) to circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular element, a baseband integrated circuit or applications processor integrated circuit for a mobile phone or a similar integrated circuit in server, a cellular network device, or other network device.

The processes or methods described in connection with Figures 2 to 7 may also be carried out in the form of a computer process defined by a computer program. The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units. As the present invention comprises features in the location tracking apparatus, the access control apparatus, and the mobile tag, each apparatus may be provided with a processor configured by a separate computer program product.

It will be obvious to a person skilled in the art that, as technology advances, the inventive concept can be implemented in various ways. The invention and its embodiments are not limited to the examples described above but may vary within the scope of the claims.

## Claims

1. A system for tracking location, comprising:
a plurality of location tracking nodes (100-112) to cover an area where the location tracking is to be carried out, wherein the location tracking nodes are configurable to form a static communication network infrastructure for routing communication messages;
at least one mobile tag (120 - 124) configured to communicate bidirectionally with at least one of said plurality of location tracking nodes at a time for location tracking purposes; and
a control apparatus (202) configured to receive through the communication network infrastructure a message associating said at least one mobile tag to at least one location tracking node and to map the location of the mobile tag on the basis of said association,
**characterized in that** the system further comprises at least one radio beacon node (300 - 308) disposable to improve the coverage of the location tracking system without belonging to the static communication network infrastructure, wherein the at least one radio beacon node is configured to broadcast a beacon frame comprising a unique identifier of the radio beacon node,
wherein the at least one mobile tag is configured to receive the broadcast and to transmit the unique identifier to the control apparatus in another message through the communication network infrastructure, and
wherein the control apparatus is further configured to receive through the communication network infrastructure the other message associating said at least one mobile tag to said at least one radio beacon node and to map the location of the mobile tag on the basis of said association.

2. The system of claim 1, wherein the system comprises a plurality of radio beacon nodes, and wherein the broadcasting is synchronized between the radio beacon nodes by configuring a radio beacon node to scan for transmissions of other radio beacon nodes and/or location tracking nodes and to synchronize its radio broadcasting to detected transmissions.

3. The system of claim 2, wherein one of the radio beacon nodes is a master node, and wherein the broadcasting is synchronized to the transmissions of the master node.

4. The system of claim 3, wherein resynchronization is controlled by the master node (302) such that the master node is configured to transmit broadcast messages comprising an information element specifying a time duration to next resynchronization, and wherein the radio beacon nodes are configured to use a previously determined transmission timing until the resynchronization derived from received broadcast messages.

5. The system of any preceding claim 2 to 4, wherein each radio beacon node is configured to add a random or pseudo-random delay to its broadcast transmissions and to insert into its beacon frames an information element specifying the added delay, and wherein each radio beacon node receiving a beacon frame from another radio beacon node is configured to determine the added delay from the received beacon frame, to reduce the added delay from a timing of the received beacon frame, and to synchronize its broadcast transmissions to the timing from which the added delay has been reduced.

6. A system for tracking location, comprising:
a plurality of location tracking nodes (100-112) to cover an area where the location tracking is to be carried out, wherein the location tracking nodes are configurable to form a static communication network infrastructure for routing communication messages;
at least one mobile tag (120 - 124) configured to communicate bidirectionally with at least one of said plurality of location tracking nodes at a time for location tracking purposes; and
a control apparatus (202) configured to receive through the communication network infrastructure a message associating said at least one mobile tag to at least one location tracking node and to map the location of the mobile tag on the basis of said association,
**characterized in that** the system further comprises at least one radio beacon node (300 - 308) disposable to improve the coverage of the location tracking system without belonging to the static communication network infrastructure, wherein the at least one radio beacon node is configured to scan passively for broadcast transmissions of said at least one mobile tag, to acquire a unique identifier of a mobile tag from a detected broadcast transmission, and to transmit the unique identifier to the control apparatus in another message through the communication network infrastructure, and
wherein the control apparatus is further configured to receive through the communication network infrastructure the other message associating said mobile tag to said at least one radio beacon node and to map the location of the mobile tag on the basis of said association.

7. The system of claim 6, wherein the at least one radio beacon node is further configured to intermittently connect to the static network infrastructure and report to the control apparatus the unique identifiers of detected mobile tags.

8. The system of claim 6 or 7, wherein the transmissions of the at least one mobile tag is synchronized, and wherein the at least one radio beacon is configured to determine a transmission timing of the at least one mobile tag, to activate the at least one radio beacon to scan for mobile tag transmissions during the determined transmission timing, and to deactivate the at least one radio beacon between consecutive transmission timings of the at least one mobile tag.

## Patentansprüche

1. System zur Ortsverfolgung, aufweisend:
eine Vielzahl von Knoten zur Ortsverfolgung (100 - 112), um eine Region abzudecken, in der die Ortsverfolgung durchgeführt werden soll, wobei die Knoten zur Ortsverfolgung konfigurierbar sind, um eine statische Kommunikationsnetzwerkinfrastruktur zum Routing von Kommunikationsnachrichten zu bilden;
mindestens ein mobiles Etikett (120 - 124), das dazu ausgeführt ist, mit mindestens einem der mehreren Knoten zur Ortungsverfolgung zu einem Zeitpunkt bidirektional für Ortsverfolgungszwecke zu kommunizieren; und
eine Steuervorrichtung (202), die dazu ausgeführt ist, über die Kommunikationsnetzwerkinfrastruktur eine Nachricht zu empfangen, die das mindestens eine mobile Etikett mindestens einem Knoten zur Ortsverfolgung zuordnet, und den Ort des mobilen Etiketts auf der Grundlage der Zuordnung zu bestimmen,
**dadurch gekennzeichnet, dass** das System ferner mindestens einen Radio-Beacon-Knoten (300 - 308) umfasst, der verfügbar ist, um die Abdeckung des Systems zur Ortsverfolgung zu verbessern, ohne zu der statischen Kommunikationsnetzwerkinfrastruktur zu gehören, wobei der mindestens eine Radio-Beacon-Knoten dazu ausgeführt ist, einen Beacon-Frame mit einer eindeutigen Kennung des Radio-Beacon-Knotens zu senden,
wobei das mindestens eine mobile Etikett dazu ausgeführt ist, das Gesendete zu empfangen und in einer anderen Nachricht die eindeutige Kennung an die Steuervorrichtung über die Kommunikationsnetzwerkinfrastruktur zu übertragen, und
wobei die Steuervorrichtung ferner dazu ausgeführt ist, über die Kommunikationsnetzwerkinfrastruktur die andere Nachricht zu empfangen, die das mindestens eine mobile Etikett dem mindestens einen Radio-Beacon-Knoten zuordnet und den Ort des mobilen Etiketts auf der Grundlage der Zuordnung zu bestimmen.

2. System nach Anspruch 1, wobei das System eine Vielzahl von Radio-Beacon-Knoten umfasst und wobei das Senden zwischen den Radio-Beacon-Knoten synchronisiert ist, indem ein Radio-Beacon-Knoten dazu ausgeführt ist zu überprüfen, ob andere Radio-Beacon-Knoten und/oder Knoten zur Ortsverfolgung senden und sein Senden an detektierte Funkübertragungen zu synchronisieren.

3. System nach Anspruch 2, wobei einer der Radio-Beacon-Knoten ein Master-Knoten ist, und wobei das Senden mit den Funkübertragungen des Master-Knotens synchronisiert ist.

4. System nach Anspruch 3, wobei die Resynchronisation durch den Masterknoten (302) gesteuert wird, indem der Masterknoten dazu ausgeführt ist, Broadcast-Nachrichten zu senden, die ein Informationselement umfassen, das eine Zeitdauer bis zu der nächsten Resynchronisation festlegt und wobei die Radio-Beacon-Knoten dazu ausgeführt sind, eine vorbestimmte Übertragungszeit bis zu der von der empfangenen Broadcast-Nachricht abgeleiteten Resynchronisation zu verwenden.

5. System nach einem der vorhergehenden Ansprüche 2 bis 4, wobei jeder Radio-Beacon-Knoten dazu ausgeführt ist, seinen Funkübertragungen zufällige oder pseudozufällige Verzögerungen hinzuzufügen und ein Informationselement in seine Beacon-Frames einzufügen, das die hinzugefügte Verzögerung spezifiziert, und wobei jeder Radio-Beacon-Knoten, der einen Beacon-Frame von einem anderen Radio-Beacon-Knoten empfängt, dazu ausgeführt ist, die hinzugefügte Verzögerung von dem empfangenen Beacon-Frame zu bestimmen, um die hinzugefügte Verzögerung von einem Zeitpunkt des empfangenen Beacon-Frames zu reduzieren und seine Funkübertragungen mit dem Zeitpunkt zu synchronisieren, von dem die hinzugefügte Verzögerung reduziert wurde.

6. System zur Ortsverfolgung, aufweisend:
eine Vielzahl von Knoten zur Ortsverfolgung (100 - 112), um eine Region abzudecken, in der die Ortsverfolgung durchgeführt werden soll, wobei die Knoten zur Ortsverfolgung konfigurierbar sind, um eine statische Kommunikationsnetzwerkinfrastruktur zum Routing von Kommunikationsnachrichten zu bilden;
mindestens ein mobiles Etikett (120 - 124), das dazu ausgeführt ist, mit mindestens einem der mehreren Knoten zur Ortungsverfolgung zu einem Zeitpunkt bidirektional für Ortsverfolgungszwecke zu kommunizieren; und
eine Steuervorrichtung (202), die dazu ausgeführt ist, über die Kommunikationsnetzwerkinfrastruktur eine Nachricht zu empfangen, die das mindestens eine mobile Etikett mindestens einem Knoten zur Ortsverfolgung zuordnet, und den Ort des mobilen Etiketts auf der Grundlage der Zuordnung zu bestimmen,
**dadurch gekennzeichnet, dass** das System ferner mindestens einen Radio-Beacon-Knoten (300 - 308) umfasst, der verfügbar ist, um die Abdeckung des Systems zur Ortsverfolgung zu verbessern, ohne zu der statischen Kommunikationsnetzwerkinfrastruktur zu gehören, wobei der mindestens eine Radio-Beacon-Knoten dazu ausgeführt ist, passiv nach Funkübertragungen des mindestens einen mobilen Etiketts zu suchen, um eine eindeutige Kennung eines mobilen Etiketts aus einer detektierten Funkübertragung zu erfassen, und in einer anderen Nachricht die eindeutige Kennung an die Steuervorrichtung über die Kommunikationsnetzwerkinfrastruktur zu übertragen, und
wobei die Steuervorrichtung ferner dazu ausgeführt ist, über die Kommunikationsnetzwerkinfrastruktur die andere Nachricht zu empfangen, die das mobile Etikett dem mindestens einen Radio-Beacon-Knoten zuordnet und den Ort des mobilen Etiketts auf der Grundlage der Zuordnung zu bestimmen.

7. System nach Anspruch 6, wobei der mindestens eine Radio-Beacon-Knoten ferner dazu ausgeführt ist, sich intermittierend mit der statischen Netzwerkinfrastruktur zu verbinden und der Steuervorrichtung die eindeutigen Kennungen der detektierten mobilen Etiketten zu melden.

8. System nach Anspruch 6 oder 7, wobei die Übertragungen des mindestens einen mobilen Etiketts synchronisiert sind, und wobei der mindestens eine Radio-Beacon dazu ausgeführt ist, eine Übertragungszeit des mindestens einen mobilen Etiketts zu ermitteln, den mindestens einen Radio-Beacon zu aktivieren, um nach Übertragungen des mobilen Etiketts während der ermittelten Übertragungszeit zu suchen, und den mindestens einen Radio-Beacon zwischen aufeinanderfolgenden Übertragungszeiten des mindestens einen mobilen Etiketts zu deaktivieren.

## Revendications

1. Système de suivi de position, comprenant :
une pluralité de noeuds de suivi de position (100-112) pour couvrir une zone où le suivi de position doit être effectué, dans lequel les noeuds de suivi de position peuvent être configurés pour former une infrastructure de réseau de communication statique afin d'acheminer des messages de communication ;
au moins une étiquette mobile (120 - 124) configurée pour communiquer de manière bidirectionnelle avec au moins l'un de ladite pluralité de noeuds de suivi de position à la fois à des fins de suivi de position ; et
un appareil de commande (202) configuré pour recevoir à travers l'infrastructure de réseau de communication un message associant ladite au moins une étiquette mobile à au moins un noeud de suivi de position et pour cartographier la position de l'étiquette mobile sur la base de ladite association,
**caractérisé en ce que** le système comprend en outre au moins un noeud de balise radio (300 - 308) pouvant être disposé pour améliorer la couverture du système de suivi de position sans pour autant appartenir à l'infrastructure de réseau de communication statique, dans lequel l'au moins un noeud de balise radio est configuré pour diffuser une trame de balise comprenant un identifiant unique du noeud de balise radio,
dans lequel l'au moins une étiquette mobile est configurée pour recevoir la diffusion et pour transmettre l'identifiant unique à l'appareil de commande dans un autre message à travers l'infrastructure de réseau de communication, et
dans lequel l'appareil de commande est en outre configuré pour recevoir à travers l'infrastructure de réseau de communication l'autre message associant ladite au moins une étiquette mobile audit au moins un noeud de balise radio et pour cartographier la position de l'étiquette mobile sur la base de ladite association.

2. Système de la revendication 1, dans lequel le système comprend une pluralité de noeuds de balise radio, et dans lequel la diffusion est synchronisée entre les noeuds de balise radio en configurant un noeud de balise radio pour explorer des transmissions d'autres noeuds de balise radio et / ou noeuds de suivi de position et pour synchroniser sa radiodiffusion avec des transmissions détectées.

3. Système de la revendication 2, dans lequel l'un des noeuds de balise radio est un noeud maître, et dans lequel la diffusion est synchronisée avec les transmissions du noeud maître.

4. Système de la revendication 3, dans lequel la resynchronisation est commandée par le noeud maître (302) de sorte que le noeud maître soit configuré pour transmettre des messages de diffusion comprenant un élément d'informations spécifiant une durée jusqu'à à la resynchronisation suivante, et dans lequel les noeuds de balise radio sont configurés pour utiliser une temporisation de transmission précédemment déterminée jusqu'à la resynchronisation dérivée des messages de diffusion reçus.

5. Système de l'une des revendications précédentes 2 à 4, dans lequel chaque noeud de balise radio est configuré pour ajouter un retard aléatoire ou pseudo-aléatoire à ses transmissions de diffusion et pour insérer dans ses trames de balise un élément d'informations spécifiant le retard ajouté, et dans lequel chaque noeud de balise radio recevant une trame de balise à partir d'un autre noeud de balise radio est configuré pour déterminer le retard ajouté à partir de la trame de balise reçue, pour réduire le retard ajouté d'une temporisation de la trame de balise reçue, et pour synchroniser ses transmissions de diffusion avec la temporisation de laquelle le retard ajouté a été réduit.

6. Système de suivi de position, comprenant :
une pluralité de noeuds de suivi de position (100-112) pour couvrir une zone où le suivi de position doit être effectué, dans lequel les noeuds de suivi de position peuvent être configurés pour former une infrastructure de réseau de communication statique afin d'acheminer des messages de communication ;
au moins une étiquette mobile (120 - 124) configurée pour communiquer de manière bidirectionnelle avec au moins l'un de ladite pluralité de noeuds de suivi de position à la fois à des fins de suivi de position ; et
un appareil de commande (202) configuré pour recevoir à travers l'infrastructure de réseau de communication un message associant ladite au moins une étiquette mobile à au moins un noeud de suivi de position et pour cartographier la position de l'étiquette mobile sur la base de ladite association,
**caractérisé en ce que** le système comprend en outre au moins un noeud de balise radio (300 - 308) pouvant être disposé pour améliorer la couverture de système de suivi de position sans pour autant appartenir à l'infrastructure de réseau de communication statique, dans lequel l'au moins un noeud de balise radio est configuré pour explorer passivement des transmissions de diffusion de ladite au moins une étiquette mobile, pour acquérir un identifiant unique d'une étiquette mobile à partir d'une transmission de diffusion détectée, et pour transmettre l'identifiant unique à l'appareil de commande dans un autre message à travers l'infrastructure de réseau de communication, et
dans lequel l'appareil de commande est en outre configuré pour recevoir à travers l'infrastructure de réseau de communication l'autre message en associant ladite étiquette mobile audit au moins un noeud de balise radio et pour cartographier la position de l'étiquette mobile sur la base de ladite association.

7. Système de la revendication 6, dans lequel l'au moins un noeud de balise radio est en outre configuré pour se connecter de manière intermittente à l'infrastructure de réseau statique et reporter à l'appareil de commande des identifiants uniques des étiquettes mobiles détectées.

8. Système de la revendication 6 ou 7, dans lequel les transmissions de l'au moins une étiquette mobile sont synchronisées, et dans lequel l'au moins une balise radio est configurée pour déterminer une temporisation de transmission de l'au moins une étiquette mobile, pour activer l'au moins une balise radio afin d'explorer les transmissions d'étiquettes mobiles pendant la temporisation de transmission déterminée, et pour désactiver l'au moins une balise radio entre des temporisations de transmissions consécutives de l'au moins une étiquette mobile.
